# EUROPEAN PATENT SPECIFICATION

(11) **EP 0 244 374 B1**
(45) Date of publication and mention of the grant of the patent: **26.01.1994**
(21) Application number: 87830162.1
(22) Date of filing: 30.04.1987
(51) Int. Cl.: B29C 47/82, B29C 45/74

(54) **Assemblable modular element stricture for making temperature adjusting assemblies for plastics material processing machines and the like**
Zusammensetzbare modulare Elementstruktur zur Herstellung von Temperaturregelungseinheiten für Kunststoffverarbeitungsmaschinen und dergleichen
Structure d'élément modulaire assemblable pour faire des assemblages de régulation de la température de machines de traitement du plastique et machines identiques

(30) Priority: 02.05.1986 IT 2028586
(43) Date of publication of application: 04.11.1987
(73) Proprietor: Piazzola, Gaetano, 21100 Varese (IT)
(72) Inventor: Piazzola, Gaetano, 21100 Varese (IT)
(74) Representative: Cicogna, Franco

(56) References cited:
- EP-A- 0 123 698
- EP-A- 0 242 340
- CH-A- 502 181
- DE-A- 1 923 154
- DE-A- 2 704 102
- US-A- 2 987 300
- US-A- 3 285 329
- US-A- 3 727 678
- US-A- 3 933 200

## Description

### BACKGROUND OF THE INVENTION

The present invention relates to an assemblable modular element structure, for making temperature adjusting assemblies or devices for plastics material processing cylinders and machines and the like.

As is known, the machines for processing plastics material, elastomeric compounds and the like are provided with temperature adjusting assemblies which operate to bring to the desired temperature the region in which the plastics material to be extruded, injected or processed is plasticized.

In order to make these temperature adjusting assemblies there are presently used several types of structures which are rather complex and which, moreover, have the drawback that they are able of properly operating exclusively for a given portion to be temperature adjusted.

The reference DE-A-1 923 154 discloses a modular element for making temperature adjusting assemblies having the features of the pre-characterizing portion of the main claim.

### SUMMARY OF THE INVENTION

Accordingly, the task of the present invention is to overcome the above mentioned drawbacks by providing such an assemblable modular element structure for making temperature adjusting assemblies for plastics material processing cylinders and machines, which affords the possibility of making said temperature adjusting assemblies starting from simple modular elements which may be easily and quickly associated with one another to provide the desired shapes.

Within that task, it is a main object of the present invention to provide such an assemblable modular element structure which affords the possibility of optimizing the temperature adjusting assembly operation, thereby assuring a very accurate thermal control and providing a higher quality product.

Another object of the present invention is to provide modular assemblable elements adapted for facilitating all of the operations for coupling electric resistances as well as the temperature adjusting air passage regions.

Yet another object of the present invention is to provide such an assemblable modular element structure, for making temperature adjusting assemblies which may be made starting from easily commercially available elements and materials and which, in addition, is of a comparatively reduced cost.

According to one aspect of the present invention, the above mentioned task and objects, as well as yet other objects, which will become more apparent thereinafter are achieved by an assemblable modular element structure, for making temperature adjusting assemblies for plastics material processing cylinders and machines, having the features of the main claim.

Further embodiments of the invention are defined in the features of the dependent claims.

### BRIEF DESCRIPTION OF THE DRAWINGS

Further advantages of the present invention will become more apparent from the following detailed description of a preferred embodiment thereof which is illustrated, by way of an indicative but not limitative example, in the accompanying drawings, where:
Figure 1 is a perspective schematic view illustrating a temperature adjusting assembly or device having a substantially flat-shape;
Figure 2 is an elevation view illustrating the flat-shape temperature adjusting assembly of Figure 1;

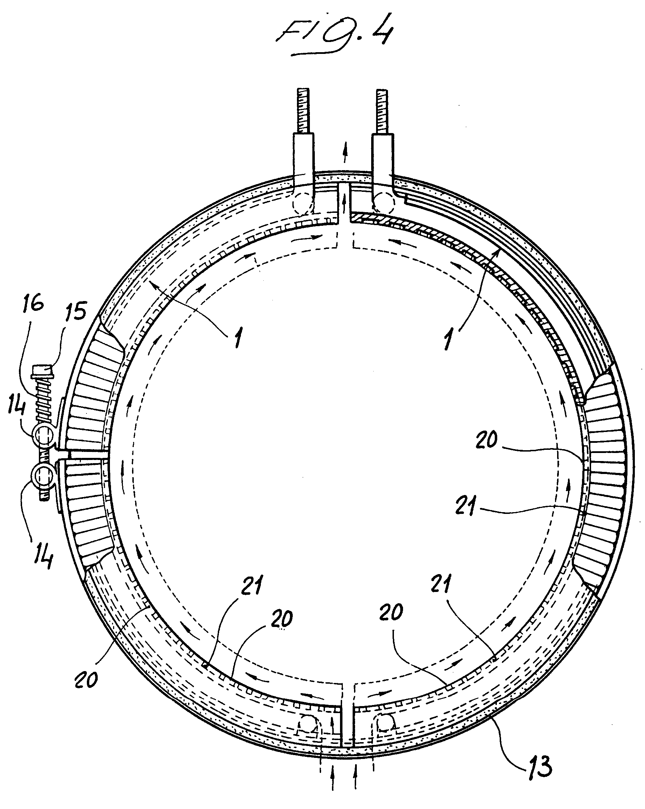

Figure 3 is a schematic perspective view illustrating a temperature adjusting assembly of substantially rectangular shape;
Figure 4 is a plan partially sectioned view illustrating a temperature adjusting assembly having a substantially circular shape;
Figure 5 is a diametrical cross-sectional view illustrating the temperature adjusting assembly of Figure 4;
Figure 6 is an elevation view of said temperature adjusting assembly;

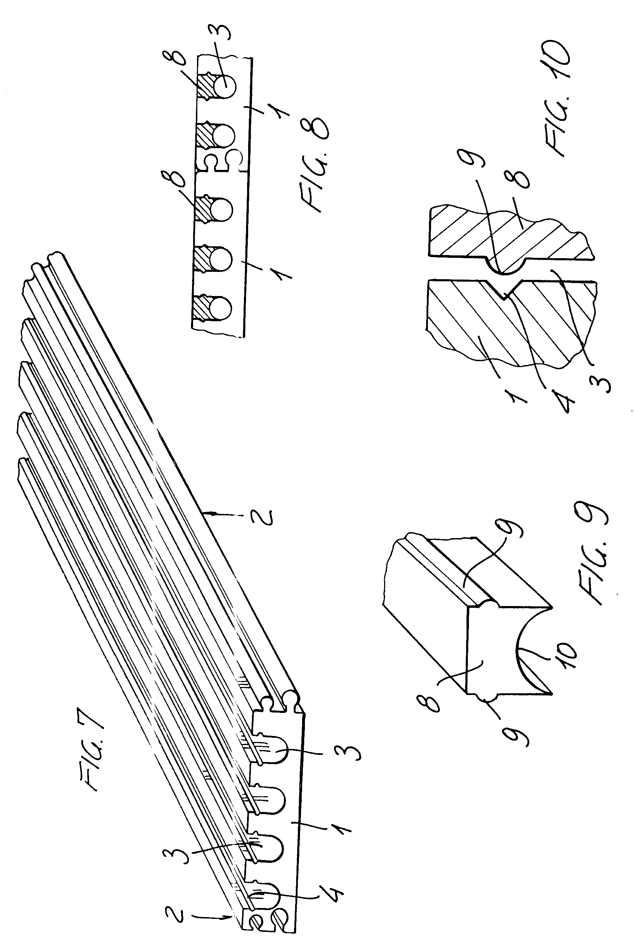

Figure 7 illustrates the detail of a flat body and specifically shows its coupling means;
Figure 8 is a schematic cross-sectional view illustrating two coupled bodies;
Figure 9 is a perspective view showing the section member for closing the hollows; and
Figure 10 illustrates, on an enlarged scale, the coupling region of the section members and hollows.

### DESCRIPTION OF THE PREFERRED EMBODIMENTS

With reference to the Figures, the assemblable modular element structure for making temperature adjusting assemblies for plastics material processing cylinders and machines, according to the invention, comprises a plurality of bodies, indicated overally at the reference number 1, which can be made with any suitable shape and size.

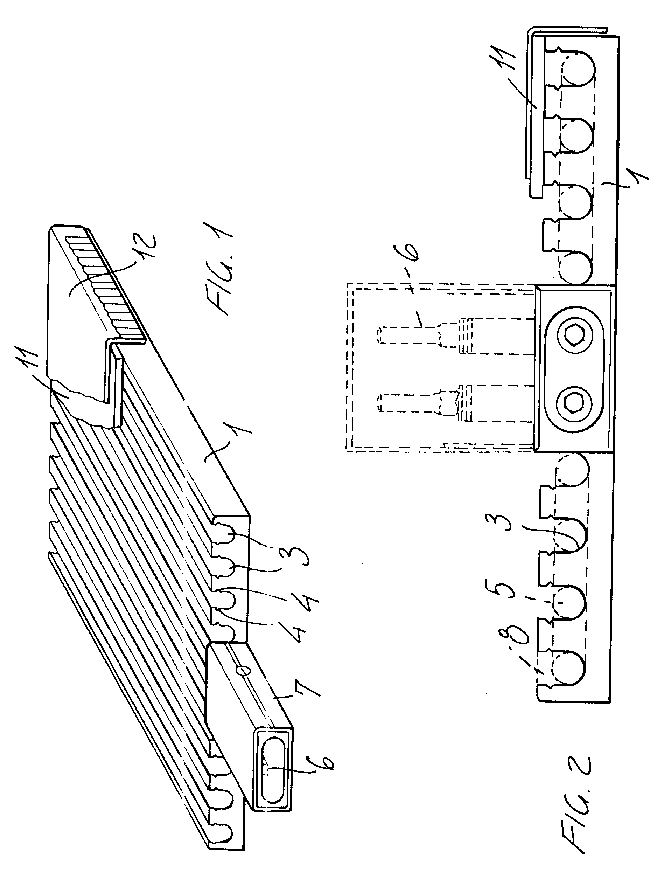

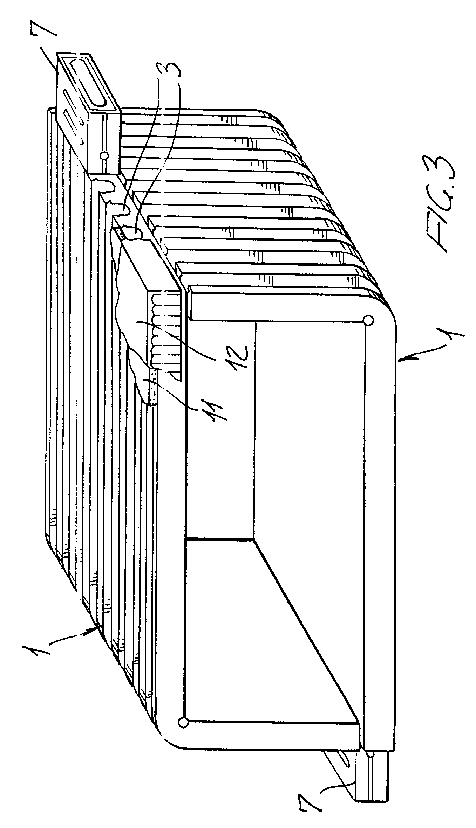

Thus, for example, as is shown in Figure 1, the bodies 1 have a substantially flat-shape, while the body 1 shown in Figure 2 has a substantially angled shape, so as to provide a rectangular structure by coupling to one another two body 1 sets.

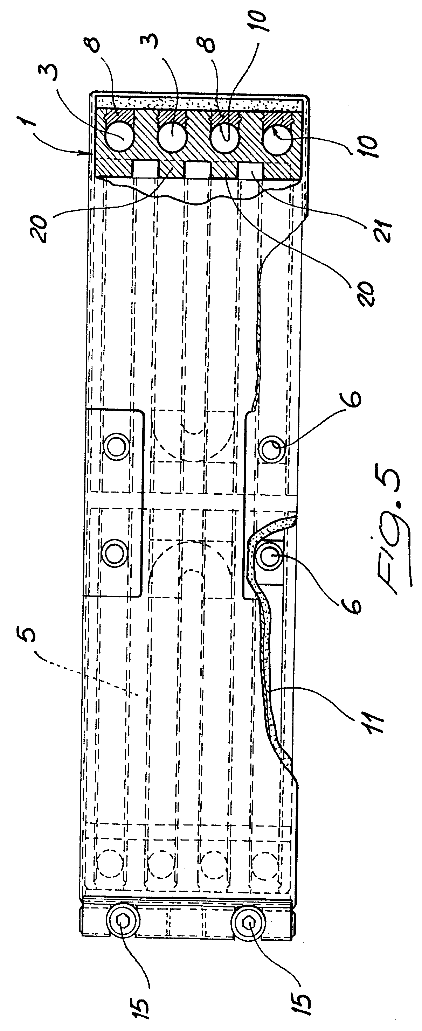

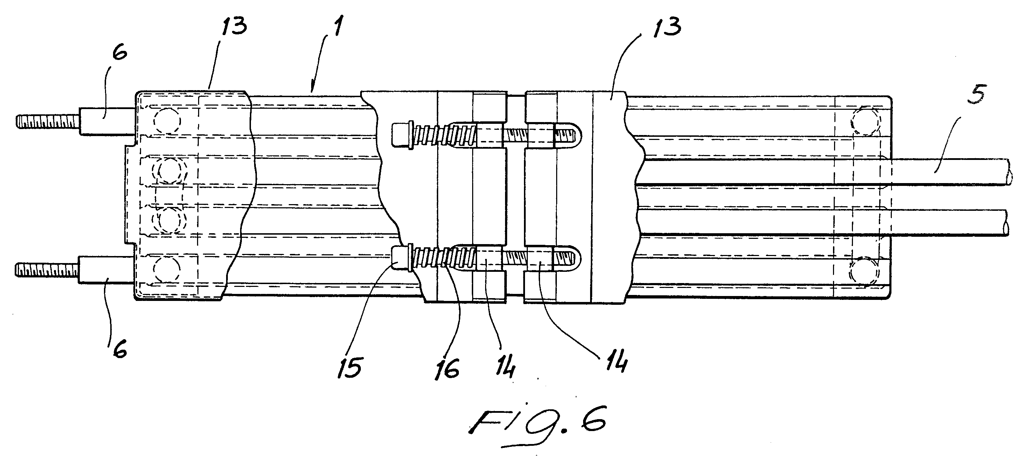

With reference to Figures 4 to 6, the bodies 1 have a substantially semicircular shape, so as to provide, by coupling two assemblies, a substantially circular shape, to be applied on the outside of plastics processing cylinders.

The bodies 1, which, preferably, but not necessarily, are made from aluminium or an aluminium alloy, are provided, at their longitudinal end portions, with coupling elements, indicated at 2, consisting of male coupling elements, on a side, and female coupling elements, on the other side, so as to mutually couple the several bodies 1 to provide the temperature adjusting assemblies with the desired size.

On a face thereof, the bodies 1 are provided with a plurality of hollows 3 which extend substantially parallel to one another, and are open, at said face, thereat there are provided V-shaped longitudinal hollows, indicated at 4, which will be illustrated in a more detailed way thereinafter.

The hollows 3 house electric resistances, indicated at 5, which are adapted for being easily housed within said hollows or cavities 3.

More specifically, the electric resistances 5 are provided with coupling plugs 6, at their ends, which may advantageously be arranged in a protecting casing 7.

The hollows 3 are removably closable by means of section members 8 which, as is clearly shown in Figure 8 are provided, on their longitudinal edges, with rounded coupling elements 9 provided for insertion into the V-shaped hollows 4 for holding therein the hollow 3 closure section members 8.

The section members 8, on their inner faces, are provided with recessed portions 10 which, in cooperation with the hollow 3 bottoms, provide a coupling region for supporting said electric resistances 5.

Advantageously, during the making process of the temperature adjusting assembly, after having coupled the bodies 1 and inserted the electric resistances, an insulating layer 11 is applied and, in the case of flat-shape bodies 1 a outer coating flat metal sheet 12 is further applied.

In the case of an annular shape temperature adjusting assembly, as is shown in Figures 4 to 6, to the temperature adjusting assembly there is applied an outer band 13, of corrugated metal sheet, covering the periphery of the assembly and holding the bodies 1 in position.

The band 13 is provided, at its end portions, with threaded pawls 14 therewith a tie rod 15 is engaged, resiliently biassed by springs 16, for suitably clamping said band.

Another important feature of the invention is that the bodies 1, and, more specifically, the semicircular shape bodies 1, are provided, on their inner surfaces, with bearing projections 20 intercalated with cut-outs 21.

The mentioned projections are arranged in a mutually offset way, so as to provide a chessboard shape, which defines a temperature adjusting air flow passage region between the bodies 1 and the portion to be temperature adjusted, thereon there are carried the bodies 1.

The air flow, as is schematically shown in Figure 4, radially circulates with respect to the temperature adjusting assembly and preferably circulates on the body to be temperature adjusted, to exit at a diametrical position.

Inner ducts may moreover be provided at the other face of the bodies 1, which ducts are provided with a plurality of projecting elements or lugs which are offset arranged and adapted for forcing air to move with a waved movement to improve the thermal exchange, thereby affording the possibility of making a very accurate temperature adjusting since the air flow is able of practically impacting on all of the mass of the temperature adjusting device, thereby preventing excessively high temperatures from developing.

From the above disclosure it should be apparent that the invention fully achieves the intended objects.

The fact is to be pointed out that modular elements have been provided which, in addition to being adapted for a quick and easy mounting, so as to provide temperature adjusting assemblies of the desired shape, provide the advantage of generating, both at the inner region of the temperature adjusting assembly contacting the portion to be temperature adjusted, and at the outer portion of said temperature adjusting assembly, labyrinth ducts for the passage of a temperature adjusting air flow so as to provide an accurate temperature adjusting.

The invention as disclosed is susceptible to many modifications and variations, all of which come within the scope of the invention.

Moreover all of the details may be replaced by other technically equivalent elements.

In practicing the invention, the used materials, provided they are compatible to the intended use, as well as the size and specific shapes may be any according to requirements.

## Claims

1. An assemblable modular element structure, for making temperature adjusting assemblies for plastics material processing cylinders and machines, comprising a plurality of bodies (1), defining, on a face thereof, a plurality of substantially parallel hollows (3) for housing at least an electric resistance (5) which may be closed by section members (8) adapted for removable association with said hollows (3), characterized in that said bodies further comprise, on the other face thereof, a plurality of bearing projections (20) for supporting the portion to be temperature adjusted, intercalated with passage cut-outs (21) and offset arranged so as to define a chessboard arrangement for allowing an air flow to pass through said bodies (1) and the portion to be temperature adjusted, and in that said bodies (1) are provided at their longitudinal edges, with respectively male and female coupling elements (2) for mutually assembling said bodies.

2. An assemblable modular element structure according to Claim 1, characterized in that said hollows (3) are open toward the outer surface of said temperature adjusting assembly and are provided, at the free edge thereof, with V-shaped notches (4), adapted to be coupled to corresponding rounded projections (9) defined longitudinally on the side portion of said section members (8), for removably coupling said section members (8) in said hollows (3).

3. An assemblable modular element structure according to Claim 1, characterized in that said section members (8) are provided, at the inner portion of said hollows (3), with a recessed portion (10) adapted to restrain said electric resistance (5) in cooperation with said hollow (3) bottoms.

4. An assemblable modular element structure, according to Claim 1, characterized in that said bodies (1) define, on their outer portions, a duct defined by a plurality of offset projecting elements adapted for providing a labyrinth air path, outside of said bodies (1), with respect to the portion to be temperature adjusted.

5. An assemblable modular element structure according to Claim 1, characterized in that in said assembly the air flow circulates along a transversal direction with respect to the axial extension of the portion to be heated, said air flow entering diametrically with respect to the outlet portion of the airflow.

6. An assemblable modular element structure according to Claim 1, characterized in that it comprises an outer band for holding said semicircular shape bodies and provided, at its end portions, with pawl members therewith a spring biassed tie rod is engaged.

## Patentansprüche

1. Zusammensetzbare modularische Elementstruktur zur Herstellung von Temperaturregelungseinheiten für Kunststoffverarbeitungszylindern und -maschinen, mit mehreren Körpern (1), die auf eine Seite,
mehreren wesentlich parallel sich erstreckenden Aufnahmen (3) zum Aufnehmen von wesentlich einem elektrischen Widerstand (5) bestimmen, der durch zur abnehmbaren Verbindung mit der obengenannten Aufnahmen (3) geeigneten Profilelemente (8) geschlossen wird,
dadurch gekennzeichnet, dass die obengenannten Körper, ausserdem, auf ihre andere Seite, mit mehreren Lagervorsprüngen (20) versehen sind, die zum Lagern der temperaturregelnden Portion dienen und mit Durchgangsritzen (21) zwischengeschaltet sind und,um eine Schachbrettanordnung zu bestimmen, versetzt angeordnet sind, somit einer Luftstrom durch den obengenannten Körper (1) und die temperaturregelnde Portion durchläucht, und dass die obengenannten Körper (1), auf ihren Längskanten, um den obengenannten Körper aneinander zusammenzusetzen, mit entsprechenden Nut- und Federverbindungselementen (2) versehen sind.

2. Zusammensetzbare modularische Elementstruktur nach Anspruch 1, dadurch gekennzeichnet, dass die obengenannten Aufnahmen (3) nach der äusseren Fläche der obengenannten Temperaturregelungseinheit geöffnet sind und, auf ihre freie Kante, mit V-förmigen Kerbschnitten (4) versehen sind, die zum Verbindung mit entsprechenden abgerundeten Vorsprüngen (9) geeignet sind, die auf die Seiteportion der obengenannten Profilen (8) längsbestimmt sind, um so die obengenannten Profilen (8) in der obengenannten Aufnahmen (3) abnehmbar zu verbinden.

3. Zusammensetzbare modularische Elementstruktur nach Anspruch 1, dadurch gekennzeichnet, dass die Profile (8), auf die innere Portion der obengenannten Aufnahmen (3), mit einer ausgehöhlten Portion, (10) versehen sind, die zum mit der Boden der obengenannten Aufnahme (3) mitwirkenden Aufhalten des obengenannten elektrischen Widerstans (5) geeignet ist.

4. Zusammensetzbare modularische Elementstruktur nach Anspruch 1, dadurch gekennzeichnet, dass die obengenannten Körper (1), auf ihren äusseren Portionen, einen Kanal bestimmen, der durch mehreren versetzten vorspringenden Elementen bestimmt wird, die zum Bilden einer meänderförmigen Luftströmen, aussen der obengenannten Körpern (1) in bezug auf die temperaturregelnden Portion, geeignet sind.

5. Zusammensetzbare modularische Elementstruktur nach Anspruch 1
dadurch gekennzeichnet, dass in der obengenannten Einheit, der Luftstrom längs einer Querrichtung in bezug auf die axiale Erstreckung der aufzuwärmenden Portion läuft, wobei dieser Luftstrom durchschnittlich in bezug auf die Austrittportion des Luftstromes strömt ein.

6. Zusammensetzbare modularische Elementstruktur nach Anspruch 1, dadurch gekennzeichnet, dass sie, zum Halten der obengenannten halbkreisförmigen Körpern, ein äusseres Band weist auf und, auf ihren Endportionen, mit Schalthakenelementen versehen ist, durch den einer federabgegliechene Zuganker eingehalten wird.

## Revendications

1. Structure d'éléments modulaires pour faire des assemblages de régulation de la température pour les machines et les cylindres de traitement des matières plastiques, comprenant une pluralité de corps (1) définant, sur l'une de leur faces, une pluralité de cavités (3) essentiellement parallèles pour y loger au moins une résistance électrique (5) qui peut être fermée par des éléments profilés (8) qui sont adaptés pour être associés d'une manière amovible avec lesdites cavités (3),
caractérisée en ce que lesdits corps comprennent, en outre, sur l'autre de leur faces, une pluralité de saillies de support (20) pour supporter la portion à être ajustée par la température, qui sont intercalées par des évidages de passage (21) et sont arrangées d'une manière décalée de façon de définir un arrangement en forme d'échiquier pour permettre qu'un écoulement d'air passe à travers desdits corps (1) et de ladite poriton à être ajustée par la température,
et en ce que lesdits corps (1) sont munis, sur leur bords longitudinaux, d'éléments d'accouplement (2) respectivement mâle et femelle, pour accoupler mutuellement lesdits corps.

2. Structure assemblable d'éléments modulaires selon la revendication 1, caractérisée en ce que lesdites cavités (3) sont ouvertes envers la surface extérieure dudit assemblage de régulation de la température et sont munies, sur leur bord libre, de dentelures (4) en forme de V, qui sont adaptées pour s'accoupler avec des projections arrondies correspondentes, définies longitudinalement sur la portion latérale desdits profilés (8), en vue d'accoupler d'une manière amovible lesdits profilés (8) dans lesdites cavités (3).

3. Structure assemblable d'éléments modulaires selon la revendication 1, caractérisée en ce que lesdits profilés (8) sont munis, dans la portion intérieure desdites cavités (3), d'une portion évidée (10) qui est apte à retenir ladite résistance électrique (5) en coopération avec lesdits fonds évidés (3).

4. Structure assemblable d'élément modulaires selon la revendication 1, caractérisée en ce que lesdits corps (1) définissent, sur leur portion extérieure, une conduite définie par une pluralité d'éléments saillants décalés qui sont aptes pour former un parcours labyrinthique pour l'air, à l'extérieur desdits corps (1), par rapport à la portion qui doit être ajustée par la température.

5. Structure assemblable d'éléments modulaires selon la revendication 1, caractérisée en ce que dans ledit assemblage l'écoulement d'air circule dans un sens transversal par rapport à l'extension axiale de la portion à être rechauffée, ledit écoulement d'air entrant dans un sens diamétral par rapport à la portion de sortie de l'écoulement d'air.

6. Structure assemblable d'éléments modulaires selon la revendication 1, caractérisée en ce qu'elle comprend une bande extérieure pour retenir lesdits corps ayant une forme sémicirculaire, ladite bande étant munie, sur ses portions d'extrémité, d'éléments en forme de cliquet par lesquels un raidisseur balancé par ressort est engagé.
